# EUROPÄISCHE PATENTSCHRIFT

(11) **EP 2 046 849 B1**
(45) Veröffentlichungstag und Bekanntmachung des Hinweises auf die Patenterteilung: **02.06.2010**
(21) Anmeldenummer: 07728001.4
(22) Anmeldetag: 12.04.2007
(51) Int. Cl.: C08F 293/00, C08F 297/08, C09J 153/00, C09D 153/00

(54) **VERFAHREN ZUR HERSTELLUNG VON ABA-TRIBLOCKCOPOLYMEREN AUF (METH)ACRYLATBASIS**
METHOD FOR THE PRODUCTION OF (METH)ACRYLATE-BASED ABA TRIBLOCK COPOLYMERS
PROCÉDÉ DE PRODUCTION DE COPOLYMÈRES TRIBLOC ABA À BASE DE (MÉTH)ACRYLATE

(30) Priorität: 28.07.2006 DE 102006035726
(43) Veröffentlichungstag der Anmeldung: 15.04.2009
(73) Patentinhaber: Evonik Röhm GmbH, 64293 Darmstadt (DE)
(72) Erfinder: BALK, Sven, 60594 Frankfurt (DE); LÖHDEN, Gerd, 45136 Essen (DE); MIESS, Christine, 63796 Kahl (DE); TRÖMER, Christine, 63546 Hammersbach (DE); MÄRZ, Monika, 63755 Alzenau (DE)
(86) Internationale Anmeldenummer: PCT/EP2007/053533
(87) Internationale Veröffentlichungsnummer: WO 2008/012116

(56) Entgegenhaltungen:
- US-B1- 6 288 173
- XU ET AL: "pH- and temperature-responsive hydrogels from crosslinked triblock copolymers prepared via consecutive atom transfer radical polymerizations" Mai 2006 (2006-05), BIOMATERIALS, ELSEVIER SCIENCE PUBLISHERS BV., BARKING, GB, PAGE(S) 2787-2797 , XP005272771 ISSN: 0142-9612 Zusammenfassung Seite 2789, linke Spalte
- KRASIA T C ET AL: "AMPHIPHILIC POLYMETHACRYLATE MODEL CO-NETWORKS: SYNTHESIS BY RAFT RADICAL POLYMERIZATION AND CHARACTERIZATION OF THE SWELLING BEHAVIOR" MACROMOLECULES, ACS, WASHINGTON, DC, US, Bd. 39, Nr. 7, 4. April 2006 (2006-04-04), Seiten 2467-2473, XP001242509 ISSN: 0024-9297

## Beschreibung

Die Erfindung betrifft ein Verfahren zur Herstellung von ABA-Triblockcopolymeren auf (Meth)acrylatbasis mit einer Amin-Funktionalisierung der A-Blöcke und deren Verwendung zum Beispiel als Formulierungsbestandteil von Reaktivklebstoffen oder Dichtungen.

Maßgeschneiderte Copolymere mit definierter Zusammensetzung, Kettenlänge, Molmassenverteilung usw. sind ein breites Forschungsfeld. Man unterscheidet unter anderem zwischen Gradienten- und Blockpolymeren. Für solche Materialien sind verschiedene Anwendungen denkbar. Im Folgenden sollen einige davon kurz vorgestellt werden. Dazu wurden unter anderem Einsatzbereiche ausgewählt, in denen Polymere eingesetzt werden, von denen die aktuelle Erfindung abzugrenzen ist.

Ein Anwendungsgebiet der erfindungsgemäßen Polymere ist als reaktiver Formulierungsbestandteil in Klebstoffen. Derartige Klebstoffe sind zum Beispiel in US 5,021,507 beschrieben. Hauptbestandteil sind Verbindungen mit freien Isocyanatgruppen, welche meist durch Kondensationsreaktion eines Überschusses von Polyisocyanatgruppen mit Polyolen erhalten werden. Zur Verbesserung der Hafteigenschaften auf bestimmten Substraten wurden diesen Verbindungen mit freien Isocyanatgruppen Bindemittel, bestehend aus Polymeren aus ethylenisch ungesättigten Monomeren, zugegeben. Als Bindemittel werden typischerweise Polyalkyl(meth)acrylate mit C₁- bis C₂₀-Alkylgruppen verwendet. Diese werden aus den entsprechenden Monomeren entweder vor der Zugabe zu den Urethanen oder in deren Beisein durch freie, radikalische Polymerisation polymerisiert.

Alternativ zu den verwendeten Polyolen ist auch der Einsatz aminfunktionalisierter Poly(meth)acrylate denkbar. Amingruppen zeigen im Vergleich zu Hydroxygruppen gegenüber Isocyanaten eine deutlich höhere Reaktivität. So ergibt sich durch Wahl der Funktionalität die Möglichkeit, Vernetzungsgeschwindigkeiten gezielt einzustellen. Interessant sind auch Formulierungen, in denen aminfunktionelle und hydroxyfuntkionelle Bindemittel nebeneinander vorliegen und auf diese Weise eine aus Verarbeitungssicht interessante stufenweise Aushärtung der Formulierung ermöglicht wird.

In US 5,866,656 sowie in EP 1036103 werden Reaktivschmelzklebstoffe beschrieben, bei denen die Bindemittel aus Poly(meth)acrylat kovalent an die Verbindungen mit freien Isocyanatgruppen in der Klebstoffzusammensetzung gebunden sind. Da diese Bindung meist durch eine Kondensationsreaktion erfolgt, spricht man bei solchen Klebstoffen, bei denen diese Bindung ausgebildet ist, von Klebstoffen in der Kondensationsstufe. Die so erhaltenen Klebstoffe zeichnen sich gegenüber denen in US 5,021,507 beschriebenen durch eine erhöhte Elastizität und eine verbesserte Haftung auf bestimmten Metallsubstraten sowie einer längeren offenen - zur Verarbeitung zur Verfügung stehenden - Zeit aus.

Allgemein bekannt ist, dass neben der Reaktion mit Isocyanaten hauptsächlich zwei Anwendungen für Aminfunktionen im Bereich der Kleb- und Dichtstoffe in Frage kommen (vgl. dazu B. Müller, W. Rath, Formulierungen von Kleb- und Dichtstoffen, 1. Auflage, Vincentz, Hannover, 2004): Primäre und sekundäre Amine finden vor allem Verwendung als Härter für Epoxidharze. Mit monofunktionellen Aminen ist auf diese Weise eine Erhöhung des Polymerisationsgrades realisierbar. Mit multifunktionellen Bausteinen ist eine Vernetzungsreaktion durchführbar. Zweikomponentensysteme mit funktionalisierten Poly(meth)acrylaten als Reaktivkomponente stellten einen ganz neuen Ansatz einer Klebstoffformulierung dar. Tertiäre Amine andererseits katalysieren die ringöffnende Polymerisation von Epoxiden. Auch auf Basis dieses Ansatzes wäre eine Zweikomponenten-Klebmasseformulierung denkbar. Im Unterschied zu der oben beschriebenen Formulierung käme man in diesem Fall jedoch mit einem Unterschuss der Aminkomponente aus.

Zweitens können primäre oder sekundäre Diamine mit Dicarbonsäuren zum Aufbau von Polyamiden eingesetzt werden. Diese altbekannte Polykondensation kann durch Einsatz multifunktioneller, poly- bzw. oligomerer Komponenten ebenfalls als Mechanismus zur Aushärtung in Kleb- oder Dichtstoffformulierungen verwendet werden.

Ein Nachteil der Klebstoffformulierungen des Standes der Technik ist die bei der Verarbeitung relevante, hohe Viskosität. Dadurch ist ein Verarbeiten der Klebstoffmasse, vor allem das Auftragen auf poröse Substrate, deutlich erschwert. Teilweise tritt auch eine Vergelung in der Kondensationsstufe auf.

Weiterhin nachteilig ist, dass freiradikalisch polymerisierten Materialien auch einen höheren Anteil niedermolekularer Bestandteile, die an den Vernetzungsreaktionen nicht teilnehmen und den extrahierbaren Bestandteil entsprechender Reaktivschmelzklebstoffe darstellen, enthalten.

Ein weiterer Nachteil ist, dass der extrahierbare Anteil im ausgehärteten Klebstoff recht hoch ist. Dies verringert unter anderem die Beständigkeit der Klebmasse gegenüber Lösungsmitteln.

Mit einer anderen Art der Polymerisation ist man dem Ziel maßgeschneiderter Polymere ein gutes Stück näher gekommen. Die ATRP-Methode (atom transfer radical polymerization) wurde in den 1990-er Jahren maßgeblich von Prof. Matyjaszewski entwickelt (Matyjaszewski et al., J.Am.Chem.Soc., 1995, 117, S.5614; WO 97/18247; Science, 1996, 272, S.866) speziell auch mit 2-(Dimethylamino)ethyl(meth)acrylat (DMAEMA) (Zhang, Matyjaszewski, Macromolecules; 1999, 32, S.1763-1766). In dieser Schrift werden reine, lange DMAEMA-Blöcke in Blockcopolymeren beschrieben. Andere Beschreibungen der Copolymerisation Amingruppen enthaltender Monomere finden sich in US 6541580 B1 oder in WO 03/031481 A3.

Die ATRP liefert engverteilte (Homo)Polymere im Molmassenbereich von Mₙ=10.000-120.000 g/mol. Ein besonderer Vorteil dabei ist, dass sowohl das Molekulargewicht als auch die Molekulargewichtsverteilung regelbar sind. Als lebende Polymerisation gestattet sie ferner den gezielten Aufbau von Polymerarchitekturen wie beispielsweise statistische Copolymere oder auch Block-Copolymer-Strukturen. Durch entsprechende Initiatoren sind z.B. zusätzlich ungewöhnliche Block-Copolymere und Sternpolymere zugänglich. Theoretische Grundlagen zum Polymerisationsmechanismus sind unter anderem in Hans Georg Elias, Makromoleküle, Band 1, 6.Auflage, Weinheim 1999, S.344 erläutert.

Blockpolymere haben einen sprunghaften Übergang zwischen den Monomeren in der Polymerkette, der als Grenze zwischen den einzelnen Blöcken definiert ist. Ein übliches Syntheseverfahren für AB-Blockpolymere ist die kontrollierte Polymerisation von Monomer A und zu einem späteren Zeitpunkt die Zugabe von Monomer B. Neben der sequentiellen Polymerisation durch chargenweise Zugabe in das Reaktionsgefäß kann ein ähnliches Ergebnis auch dadurch erzielt werden, dass man bei einer kontinuierlichen Zugabe der beiden Monomere deren Zusammensetzungen zu bestimmten Zeitpunkten sprunghaft ändert.

Als lebende bzw. kontrollierte Polymerisationsmethoden eignen sich neben der anionischen oder der Gruppentransfer-Polymerisation auch moderne Methoden der kontrollierten radikalischen Polymerisation wie z.B. die RAFT-Polymerisation. Der Mechanismus der RAFT-Polymerisation wird in WO 98/01478 bzw. EP 0910587 näher beschrieben. Anwendungsbeispiele finden sich in EP1205492.

Die oben beschriebenen Probleme wurden in WO 05/047359 insofern gelöst, dass durch Anwendung einer kontrollierten Polymerisationsmethode, in Form der atom transfer radical polymerisation, Bindemittel mit sehr engen Molekulargewichtsverteilungen zur Verfügung gestellt werden konnten, die durch den gegenüber freiradikalisch polymerisiert (Meth)acrylaten einen nur geringen Anteil hochmolekularer Bestandteile aufweisen. Diese Bestandteile bewirken in Polymermischungen insbesondere eine Erhöhung der Viskosität.

Nachteil der nach WO 05/047359 dargestellten Reaktivklebstoffe ist jedoch eine statistische Verteilung der Hydroxy-, Mercapto-, bzw. Amingruppen in der Polymerkette des Bindemittels. Dies führt zu einer engmaschigen Vernetzung und einer somit verminderten Elastizität der Klebemasse. Daraus kann auch eine Verschlechterung der Substratbindung resultieren. Dieser Nachteil kommt insbesondere zum Tragen, wenn man Polyisocyanate mit mehr als zwei freien Isocyanatgruppen als Formulierungsbestandteil des Reaktivschmelzklebstoffs verwendet. Zur Auflistung und Beschreibung der freie Isocyanatgruppen tragenden Verbindungen sei auf die entsprechende Beschreibung in WO 05/047359 verwiesen.

Ein zweites Beispiel für potentielle Anwendungen solcher Polymere, die eine Gradienten- oder Blockstruktur aufweisen, wird im Folgenden beschrieben:
Um Feststoffe in einem flüssigen oder festen Medium, wie zum Beispiel in Lacken, wässrigen Pigmentdispersionen oder Formmassen, die zum Beispiel duroplastische und thermoplastische Polymere sind, homogen zu verteilen und gegebenenfalls zu stabilisieren, werden Dispergiermittel als Hilfsstoffe hinzugegeben. Hierzu müssen sie verschiedene Eigenschaften aufweisen - wie z.B. mit der Pigmentoberfläche in Wechselwirkung treten. Zudem sollten Dispergiermittel Bereiche im Molekül besitzen, die mit dem Medium gut verträglich sind. Dies sind für organische Medien zum Beispiel hydrophobe Strukturen wie Aryl- oder Alkylstrukturen. Für wässrige Medien sollten hydrophile Strukturen, die wasserlöslich sind, wie Polyethylenglycole verwendet werden.
Häufig werden als Dispergiermittel Polymere auf Basis von ethylenisch ungesättigten Monomeren, wie beispielsweise (Meth)acrylate oder Styrole eingesetzt. Üblicherweise werden die Monomere mittels freier radikalischer Polymerisation umgesetzt. Mit den herkömmlichen Verfahren können nur statistische Verteilungen der Monomere in den Ketten erzielt werden. Mit solchen Polymerarchitekturen ist eine effiziente Dispergierung jedoch nur schlecht möglich. Auch dem Schaumbildungsproblem kann nur wenig entgegengesteuert werden. Zur Optimierung bei Anwendungen der beschriebenen Art sind daher neue Polymerarchitekturen nötig.

Für Dispersionen mit geringer Schaumbildung werden beispielsweise in DE 10236133 und DE 1416019 durch lebende bzw. kontrollierte Polymerisation Gradientencopolymere mit einem sehr polaren, aus hydroxy- bzw. aminfunktionellen Wiederholungseinheiten bestehenden Kettenendsegmenten hergestellt. Gradientencopolymere sind Copolymere, die zum Beispiel aus den Monomeren A und B bestehen, in deren Einzelketten ein Gradient der Verteilung der Monomerbausteine entlang der Ketten besteht. Das eine Kettenende ist reich an Monomer A und arm an Monomer B, das andere Ende reich an Monomer B und arm an Monomer A. Gradientencopolymere grenzen sich zu Blockcopolymeren durch den fließenden Übergang zwischen den Monomeren A und B ab.

Mittels ATRP hergestellte, aminfunktionalisierte Blockcopolymere werden überwiegend im Einsatz als Dispergiermittel beschrieben: In WO 00/40630 werden A-B-Diblockcopolymere mit einem mindestens 50%igem Amin Funktionalisierungsgrad der A-Blöcke beschrieben. Diese Erfindung unterscheidet sich von der vorliegendem in der nur einseitigen Endfunktionalisierung der Blockcopolymere, den längeren Blöcken, dem hohen Funktionalisierungsgrad und den damit insgesamt höheren Herstellungskosten der Polymere. In WO 03/046029 A1 wird die entsprechende Synthese weiter spezifiziert und vor allem die Dispergierung mit Pigmenten beschrieben. Aber auch hier werden nur die zur Dispergierung gegenüber Triblockcopolymeren günstigeren Diblockcopolymere beschrieben. Gleiches gilt für EP 1501881 A!. hier werden in einem oder beiden Blöcken Amin funktionalisierte Diblockcopolyere und deren Endgruppenfunktionalisierung mittels anschließender Substitution beschrieben.

A-B-Diblockcopolymere mit homopolymeren Amin funktionalisierten Blöcken werden in Auschra et al. (Progress in Organic Coatings, 2002, 45, 83-93) beschrieben. Analog wird in WO 02/28913 A2 die Herstellung von Diblockcopolymeren mit Amin funktionalisierten Homopolymerblöcken beschrieben. Die Amingruppen werden anschließend in einer polymeranalogen Reaktion in quarternäre Ammoniumgruppen umgewandelt. In WO 02/28913 stellt dieses Vorgehen jedoch nur eine Alternative zur direkten Synthese der ionischen Polymere in wässrigen Systemen, wie sie auch in US 2006/0008490 A1 beschrieben ist, dar. In Gan et al. (J. Polym. Sci. - Part A: Polym. Chem., 2003, 41, 2688-2695) werden analog solche aminfuntkionelle Blöcke mit tert-Butylmethacrylat-Blöcken kombiniert, um durch anschließende Verseifung potentiell anionische Säure funktionalisierte Blöcke mit potentiell kationischen Ammonium Blöcken zu kombinieren.

In Chatterjee et al. (Polymer, 2005, 46, 10699-10708) werden ABA-Triblockcopolymere mit Amin funktionalisierten Außenblöcken beschrieben. Im Unterschied zu der vorliegenden Erfindung handelt es sich dabei jedoch ausschließlich um homopolymere Blöcke, die mit dem Zweck hergestellt werden, eine besonders hohe Polarität zu realisieren. Dies ist jedoch nicht das Ziel der vorliegenden Erfindung. Vielmehr wird hier die Einführung weniger funktioneller Reaktivgruppen angestrebt. Auch unterscheidet sich die zitierte Erfindung von der vorliegenden insofern, dass bei den in der vorliegenden Schrift beschriebenen Polymeren ein großer Löslichkeitsunterschied zwischen den Blöcken nicht gewollt und eher schädlich ist.

Eine andere Anwendung für Amin funktionalisierte Blöcke findet sich in kosmetischen Anwendungen wie z.B. Haarspülungen. In EP 1189976 B1 bzw. EP 1189975 A1 werden ABA.Triblockcopolymere mit Amin funktionalisierten A-Blöcken und einem zuvor als Makroinitiator eingeführten Polysiloxan B-Block beschrieben. Auch hier ist das Ziel eine anschließende Überführung der Amingruppen in kationische Ammoniumgruppen. Weitere Unterschiede zur vorliegenden Erfindung sind die insgesamt drei- bis vierstufige Synthese der Polymere und die gegenüber reinen Poly(meth)acrylaten schlechte Löslichkeit der Polysiloxansegmente. Die gleiche Anwendung liegt JP 2004277300 A2 zugrunde. Hier werden Amingruppen jedoch nur als Alternative zu Kaliummethacrylat Blöcken, mittels derer eine für die Anwendung relevante Haftung auf Proteinoberflächen herbeigeführt wird, aufgeführt.

Weitere Anwendungen sind unter anderem eine Verwendung als Verträglichkeitsvermittler in Polymermischungen, als Präpolymer zum Aufbau hochmolekularer Blockstrukturen, als Bindemittel für Klebstoffe oder als Bindemittel für Dichtmassen.

Eine neue Stufe der Entwicklung sind die im Folgenden beschriebenen Triblockcopolymere. Man unterscheidet zwischen ABC und ABA-Triblockcopolymeren.

ABA-Triblockcopolymere sind wiederum mit 5-Blockcopolymeren der Zusammensetzung ACBCA gleichzusetzen.

Aufgabe war es, Triblockpolymere der Struktur ABA darzustellen. Insbesondere besteht der Bedarf an amin-terminierten (Meth)acrylaten bzw. (Meth)acrylaten, die in Ihren Eigenschaften amin-terminierten Materialien entsprechen oder sehr nahe kommen. Dies kann zum Beispiel durch den Einbau einer bis weniger Amin-Gruppen am Kettenende erreicht werden. Mit Kettenenden wird das Endsegment eines Polymers bezeichnet, das max. 1-20 Gew.-% des Gesamtgewichtes des Polymeren ausmacht.

(Meth)acrylate, die Amin-Kettenenden führen bzw. amin-terminierte (Meth)acrylate eignen sich als Präpolymere für Vernetzungen, den Aufbau diverser Blockstrukturen durch Verwendung in Polykondensations- bzw. Polyadditionsreaktionen, zur weiteren Umsetzung der Kettenenden mit dem Ziel, bis dato nicht zugängliche Funktionalitäten anzuknüpfen, oder für spezielle biologische Reaktionen.

Eine weitere Aufgabe der Erfindung ist es, reaktive Amingruppen enthaltene Polymere als Bindemittel derart zur Verfügung zu stellen, dass die Zahl solcher Gruppen im Polymer, unter guter Verfügbarkeit für die Aushärtungsreaktion, möglichst gering gehalten wird. Ein höherer Anteil polarer Gruppen im Bindemittel führt zu einer eventuellen Vergelung oder zumindest zu einer zusätzlichen Erhöhung der Schmelzviskosität des Reaktivschmelzklebstoffes. Diese Aufgabe kann durch die gezielte Anbringung der Funktionalitäten an das Kettenende oder in die Nähe desselbigen gelöst werden.

Eine weitere Aufgabe ist es, ein solches Material mit einer möglichst engen Molekulargewichtsverteilung unter 1,8 zur Verfügung zu stellen. Auf diese Weise werden sowohl die Anteile höhermolekularer Bestandteile, die u.a. zu einer ungewünschten Erhöhung der Schmelzviskosität beitragen, als auch die Anteile besonders niedermolekularer Bestandteile, die eine Verschlechterung der Lösungsmittelbeständigkeit der Klebemasse hervorrufen können, minimiert.

In Anbetracht des identifizierten und diskutierten Standes der Technik lag unter anderem die Aufgabe zugrunde, einen Reaktivklebstoff zur Verfügung zu stellen, der eine große Anfangsfestigkeit aufweist, ohne dass eine vorzeitige Vergelung auftritt. Weiterhin sollte eine Verringerung der Viskosität bzw. der Viskositätsstabilität einer Schmelze des Reaktivklebstoffs bei vorgegebener Verarbeitungstemperatur zur Verbesserung der Verarbeitbarkeit erreicht werden. Ferner betrafen die Aufgaben u.a. einen nur geringen Anteil extrahierbarer Komponenten in der ausgehärteten Klebemasse und sehr gute Hafteigenschaften gegenüber einer großen Zahl unterschiedlicher Materialien.

Aufgabe der vorliegenden Erfindung ist es daher unter anderem ein Bindemittel für Reaktivschmelzklebstoffe zur Verfügung zu stellen, dass entweder aminterminiert ist oder aber eine geringe Anzahl freie Amingruppen in der Nähe der Kettenenden aufweist. Solche Materialien weisen bei der Formulierung in Reaktivklebstoffmassen eine höhere Elastizität der Klebmasse auf. Daraus resultiert auch eine Verbesserung der Haftung auf dem Substrat. Solche erfindungsgemäßen Polymere können auch in Dichtmassen Verwendung finden.

Die Aufgabe wurde gelöst durch das zur Verfügung Stellen von Blockcopolymeren der Zusammensetzung ABA mit ≤ 4 funktionellen Gruppen in den einzelnen A-Blöcken, dadurch gekennzeichnet, dass Block A ein Copolymer enthaltend aminfunktionalisierte (Meth)acrylate und Monomere ausgewählt aus der Gruppe der (Meth)acrylate oder deren Mischungen, und ein Block B, enthaltend (Meth)acrylate oder deren Mischungen, die keine Aminfunktion aufweisen,
als ABA-Blockcopolymerisate polymerisiert werden.

Die Schreibweise (Meth)acrylat bedeutet hier sowohl Methacrylat, wie z.B. Methylmethacrylat, Ethylmethacrylat usw., als auch Acrylat, wie z.B. Methylacrylat, Ethylacrylat usw., sowie Mischungen aus beiden.

Es wurde gefunden, dass auch ABA-Blockcopolymere mit ≤2 Amingruppen in den einzelnen A-Blöcken dargestellt werden können.

Es können sowohl den Copolymeren des Blockes A, als auch den Copolymeren des Blockes B 0-50 Gew.-% mittels ATRP polymerisierbare Monomere, die nicht zu der Gruppe der (Meth)acrylate gezählt werden, zugegeben werden.

Eine bevorzugte Ausführungsform stellen Blockcopolymere dar, die bei einer ABA Zusammensetzung ≤4 Amingruppen in den einzelnen A-Blöcken aufweisen und dabei der Block A ein Copolymer enthaltend aminfunktionalisierte (Meth)acrylate und Monomere ausgewählt aus der Gruppe der (Meth)acrylate oder deren Mischungen und optional weitere mittels ATRP polymerisierbare Monomere, die nicht zu der Gruppe der (Meth)acrylate gezählt werden, und ein Block B, enthaltend (Meth)acrylate oder deren Mischungen, die keine Aminfunktion aufweisen und optional weitere mittels ATRP polymerisierbare Monomere, die nicht zu der Gruppe der (Meth)acrylate gezählt werden, als ABA-Blockcopolymerisate polymerisiert werden, wobei die mittels ATRP polymerisierbaren Monomere auch nur in Block A copolymerisiert werden oder nur in Block B copolymerisiert werden können.

Die Blockcopolymere der Zusammensetzung ABA bestehen zu weniger als 20% des Gesamtgewichtes, bevorzugt weniger als 10%, aus A-Blöcken.

ABA-Triblockcopolymere sind wiederum mit 5-Blockcopolymeren der Zusammensetzung ACBCA gleichzusetzen. Wobei diese Blockcopolymere dadurch gekennzeichnet sind, dass die Zusammensetzung der C-Blöcke der Zusammensetzung des nicht aminfunktionalisierten Anteils in den A-Blöcken entspricht.

In einer besonderen Ausführungsform sind die Blockcopolymere dadurch gekennzeichnet, dass die einzelnen A-Blöcke wiederum in sich eine AC-Diblockstruktur aufweisen können und somit zu ACBCA-Pentablockcopolymeren führen.

Diese Blockcopolymere können dadurch gekennzeichnet sein, dass die Zusammensetzung der C-Blöcke der Zusammensetzung des nicht aminfunktionalisierten Anteils in den A-Blöcken entspricht.

Block A besteht aus maximal 4 aminfunktionalisierten Monomeren, die aus der Gruppe der aminfunktionalisierten (Meth)acrylate besteht. Block B enthält keine aminfunktionalisierten (Meth)acrylate.

Zudem wurde ein Verfahren zur Herstellung von Blockcopolymeren der Zusammensetzung ABA entwickelt. Mit einer speziellen Form der lebenden Polymerisation, der Atom Transfer Radical Polymerisation (ATPR), können gut kontrollierte Zusammensetzungen, Architekturen und definierte Funktionalitäten in ein Polymeres eingebaut werden.

Es wurde gefunden, dass durch den Einsatz eines bifunktionalen Initiators gezielt eine ABA oder ACBCA Struktur aufgebaut werden kann.

Aminfunktionalisierte (Meth)acrylate, die in Block A polymerisiert werden, sind bevorzugt Dialkylaminoalkyl(meth)acrylate, Alkylaminoalkyl(meth)acrylate oder Aminoalkyl(meth)acrylate der allgemeinen Form H₂C=CR¹-C(=O)XR²NR³R⁴. Dabei handelt es sich bei R¹ um Wasserstoff oder eine Methylgruppe. R² steht für gradkettige, verzweigte oder cycloaliphatische zweifach funktionalisierte Kohlenwasserstoffsegmente mit 2 bis 36 C-Atomen, die durch Veresterung von Aminoalkoholen mit Acrylsäure oder Methacrylsäure eingeführt wurden. Bei X handelt es sich um Sauerstoff oder -NH-. Bei R³ und R⁴ kann es sich um identische oder auch unterschiedliche organische Reste aus der Gruppe gradkettigen, verzweigten oder cycloaliphatischen Alkyl- und / oder Arylreste mit 2 bis 20 C-Atomen handeln. Insbesondere bevorzugt sind 2-Dimethylaminoethyl-methacrylat (DMAEMA), 2-Diethylaminoethyl-methacrylat (DEAEMA), 2-*tert*-butylaminoethyl-methacrylat (t-BAEMA), 2-Dimethylaminoethyl-acrylat (DMAEA), 2-Diethylaminoethyl-acrylat (DEAEA), 2-*tert*-butylaminoethyl-acrylat (t-BAEA), 3-Dimethylaminopropyl-methacrylamid (DMAPMA) und 3-Dimethylaminopropyl-acrylamid (DMAPA).

Monomer, die sowohl in Block A als auch in Block B polymerisiert werden sind ausgewählt aus der Gruppe der (Meth)acrylate wie beispielsweise Alkyl(meth)acrylate von gradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat, i-Butyl(meth)acrylat, t-Butyl-(meth)acrylat, Pentyl(meth)acrylat, 2-Ethylhexyl(meth)acrylat, Stearyl-(meth)acrylat, Lauryl(meth)acrylat, Cyclohexyl(meth)acrylat, Isobornyl-(meth)acrylat; Aryl(meth)acrylate wie zum Beispiel Benzyl(meth)acrylat oder Phenyl(meth)acrylat die jeweils unsubstituiert oder 1-4-fach substituierte Arylreste aufweisen können; andere aromatisch substituierte (Meth)acrylate wie beispielsweise Naphthyl(meth)acrylat; Mono(meth)acrylate von Ethern, Polyethylenglycolen, Polypropylenglycolen oder deren Mischungen mit 5-80 C-Atomen, wie beispielsweise Tetrahydrofurfurylmethacrylat, Methoxy(m)ethoxyethylmethacrylat, 1-Butoxypropylmethacrylat, Cyclohexyloxymethylmethacrylat, Benzyloxymethylmethacrylat, Furfurylmethacrylat, 2-Butoxyethylmethacrylat, 2-Ethoxyethylmethacrylat, Allyloxymethylmethacrylat, 1-Ethoxybutylmethacrylat, 1-Ethoxyethylmethacrylat, Ethoxymethylmethacrylat, Poly(ethylenglycol)methylether(meth)acrylat und Poly(propylenglycol)-methylether(meth)acrylat.

Neben den zuvor dargelegten (Meth)acrylaten können die zu polymerisierenden Zusammensetzungen auch weitere ungesättigte Monomere aufweisen, die mit den zuvor genannten (Meth)acrylaten und mittels ATRP copolymerisierbar sind. Hierzu gehören unter anderem 1-Alkene, wie 1-Hexen, 1-Hepten, verzweigte Alkene wie beispielsweise Vinylcyclohexan, 3,3-Dimethyl-1-propen, 3-Methyl-1-diisobutylen, 4-Methyl-1-penten, Acrylnitril, Vinylester wie z.B. Vinylacetat, Styrol, substituierte Styrole mit einem Alkylsubstituenten an der Vinylgruppe, wie z.B. α-Methylstyrol und α-Ethylstyrol, substituierte Styrole mit einem oder mehreren Alkylsubstituenten am Ring wie Vinyltoluol und p-Methylstyrol, halogenierte Styrole wie beispielsweise Monochlorstyrole, Dichlorstyrole, Tribromstyrole und Tetrabromstyrole; heterocyclische Verbindungen wie 2-Vinylpyridin, 3-Vinylpyridin, 2-Methyl-5-vinylpyridin, 3-Ethyl-4-vinylpyridin, 2,3-Dimethyl-5-Vinylpyridin, Vinylpyrimidin, 9-Vinylcarbazol, 3-Vinylcarbazol, 4-Vinylcarbazol, 2-Methyl-1-vinylimidazol, Vinyloxolan, Vinylfuran, Vinylthiophen, Vinylthiolan, Vinylthiazole, Vinyloxazole und Isoprenylether; Maleinsäurederivate, wie beispielsweise Maleinsäureanhydrid, Maleinimid, Methylmaleinimid und Diene wie z.B. Divinylbenzol, sowie in den A-Blöcken die jeweiligen hydroxyfunktionalisierten und/oder aminofunktionalisierten und/oder mercaptofunktionalisierten Verbindungen. Ferner können diese Copolymere auch derart hergestellt werden, dass sie eine Hydroxy- und/oder Amino- und/oder Mercaptofunktionalität in einem Substituenten aufweisen. Solche Monomere sind beispielsweise Vinylpiperidin, 1-Vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, hydrierte Vinylthiazole und hydrierte Vinyloxazole. Besonders bevorzugt werden Vinylester, Vinylether, Fumarate, Maleate, Styrole oder Acrylonitrile mit den A-Blöcken und/oder B-Blöcken copolymerisiert.

Das Verfahren kann in beliebigen halogenfreien Lösungsmitteln durchgeführt werden. Bevorzugt werden Toluol, Xylol, H₂O; Acetate, vorzugsweise Butylacetat, Ethylacetat, Propylacetat; Ketone, vorzugsweise Ethylmethylketon, Aceton; Ether; Aliphate, vorzugsweise Pentan, Hexan, aber auch Biodiesel.

Die Blockcopolymere der Zusammensetzung ABA werden mittels sequentieller Polymerisation dargestellt.

Neben der Lösungspolymerisation kann die ATPR auch als Emulsions-, Miniemulsions-, Mikroemulsions-, Suspension- oder Substanzpolymerisation durchgeführt werden.

Die Polymerisation kann bei Normaldruck, Unter- oder Überdruck durchgeführt werden. Auch die Polymerisationstemperatur ist unkritisch. Im Allgemeinen liegt sie jedoch im Bereich von -20°C bis 200°C, vorzugsweise von 0°C bis 130°C und besonders bevorzugt von 50°C bis 120°C.

Vorzugsweise weißt das erfindungsgemäße Polymer ein zahlenmittleres Molekulargewicht zwischen 5000 g/mol und 100000 g/mol, besonders bevorzugt ≤ 50000 g/mol und ganz besonders bevorzugt zwischen 7500 g/mol und 25000 g/mol auf.

Es wurde gefunden, dass die Molekulargewichtsverteilung unter 1,8, bevorzugt unter 1,6, besonders bevorzugt unter 1,4 und idealerweise unter 1,3 liegt.

Als bifunktionelle Initiatoren können RO₂C-CHX-(CH₂)ₙ-CHX-CO₂R, RO₂C-C(CH₃)X-(CH₂)ₙ-C(CH₃)X-CO₂R, RO₂C-CX₂-(CH₂)ₙ-CX₂-CO₂R, RC(O)-CHX-(CH₂)ₙ-CHX-C(O)R, RC(O)-C(CH₃)X-(CH₂)ₙ-C(CH)₃X-C(O)R, RC(O)-CX₂-(CH₂)ₙ-CX₂-C(O)R, XCH₂-CO₂-(CH₂)ₙ-OC(O)CH₂X, CH₃CHX-CO₂-(CH₂)ₙ-OC(O)CHXCH₃, (CH₃)₂CX-CO₂-(CH₂)ₙ-OC(O)CX(CH₃)₂, X₂CH-CO₂-(CH₂)ₙ-OC(O)CHX₂, CH₃CX₂-CO₂-(CH₂)ₙ-OC(O)CX₂CH₃, XCH₂C(O)C(O)CH₂X, CH₃CHXC(O)C(O)CHXCH₃, XC(CH₃)₂C(O)C(O)CX(CH₃)₂, X₂CHC(O)C(O)CHX₂, CH₃CX₂C(O)C(O)CX₂CH₃, XCH₂-C(O)-CH₂X, CH₃-CHX-C(O)-CHX-CH₃, CX(CH₃)₂-C(O)- CX(CH₃)₂, X₂CH-C(O)-CHX₂, C₆H₅-CHX-(CH₂)ₙ-CHX-C₆H₅, C₆H₅-CX₂-(CH₂),-CX₂-C₆H₅, C₆H₅-CX₂-(CH₂),-CX₂-C₆H₅, o,- m- bzw. p-XCH₂-Ph-CH₂X, o,- m- bzw. p-CH₃CHX-Ph-CHXCH₃, o,- m- bzw. p-(CH₃)₂CX-Ph-CX(CH₃)₂, o,- m- bzw. p-CH₃CX₂-Ph-CX₂CH₃, o,- m- bzw. p-X₂CH-Ph-CHX₂, o,- m- bzw. p-XCH₂-CO₂-Ph-OC(O)CH₂X, o,- m- bzw. p-CH₃CHX-CO₂-Ph-OC(O)CHXCH₃, o,- m- bzw. p-(CH₃)₂CX-CO₂-Ph-OC(O)CX(CH₃)₂, CH₃CX₂-CO₂-Ph-OC(O)CX₂CH₃, o,- m- bzw. p-X₂CH-CO₂-Ph-OC(O)CHX₂ oder o,- m- bzw. p-XSO₂-Ph-SO₂X (X steht für Chlor, Brom oder Iod; Ph steht für Phenylen (C₆H₄); R repräsentiert einen aliphatischen Rest aus 1 bis 20 Kohlenstoffatomen, der linearer, verzweigter oder auch cyclischer Struktur sein kann, gesättigt oder einfach bzw. mehrfach ungesättigt sein kann und einen bzw. mehrere Aromaten enthalten kann oder aber aromatenfrei ist und n ist eine Zahl zwischen 0 und 20) werden. Vorzugsweise werden 1,4-Butandiol-di-(2-bromo-2-methylpropionat), 1,2-Ethylenglycol-di-(2-bromo-2-methylpropionat), 2,5-Dibrom-adipinsäure-di-ethylester oder 2,3-Dibrommaleinsäure-di-ethylester verwendet. Aus dem Verhältnis Initiator zu Monomer ergibt sich das spätere Molekulargewicht, falls das gesamte Monomer umgesetzt wird.

Katalysatoren für ATPR sind in Chem.Rev. 2001, 101, 2921 aufgeführt. Es werden überwiegend Kupferkomplexe beschrieben - unter anderem kommen aber auch Eisen-, Rhodium-, Platin-, Ruthenium- oder Nickelverbindungen zur Anwendung. Allgemein können alle Übergangsmetallverbindungen verwendet werden, die mit dem Initiator, bzw. der Polymerkette, die eine übertragbare Atomgruppe aufweist, einen Redox-Zyklus bilden können. Kupfer kann dazu beispielsweise ausgehend von Cu₂O, CuBr, CuCl, Cul, CuN₃, CuSCN, CuCN, CuNO₂, CuNO₃, CuBF₄, Cu(CH₃COO) oder Cu(CF₃COO) dem System zugeführt werden.

Eine Alternative zu der beschriebenen ATRP stellt eine Variante derselben dar:
In der so genannten reversen ATRP können Verbindungen in höheren Oxidationsstufen wie z.B. CuBr₂, CuCl₂, CuO, CrCl₃, Fe₂O₃ oder FeBr₃ eingesetzt werden. In diesen Fällen kann die Reaktion mit Hilfe klassischer Radikalbildner wie beispielsweise AIBN initiiert werden. Hierbei werden die Übergangsmetallverbindungen zunächst reduziert, da sie mit den aus den klassischen Radikalbildnern erzeugten Radikalen umgesetzt werden. Die reverse ATRP wurde u.a. von Wang und Matyjaszewski in Macromolekules (1995), Bd. 28, S. 7572ff beschrieben.

Eine Variante der reversen ATRP stellt der zusätzliche Einsatz von Metallen in der Oxidationsstufe null dar. Durch eine anzunehmende Komproportionierung mit den Übergangsmetallverbindungen der höheren Oxidationsstufe wird eine Beschleunigung der Reaktionsgeschwindigkeit bewirkt. Dieses Verfahren wird in WO 98/40415 näher beschrieben.

Das molare Verhältnis Übergangsmetall zu bifunktionellem Initiator liegt im Allgemeinen im Bereich von 0,02:1 bis 20:1, vorzugsweise im Bereich von 0,02:1 bis 6:1 und besonders bevorzugt im Bereich von 0,2:1 bis 4:1, ohne dass hierdurch eine Beschränkung erfolgen soll.

Um die Löslichkeit der Metalle in organischen Lösungsmitteln zu erhöhen und gleichzeitig die Bildung stabiler und dadurch polymerisationsinaktiver Organometallverbindungen zu vermeiden, werden Liganden dem System zugegeben. Zusätzlich erleichtern die Liganden die Abstraktion der übertragbaren Atomgruppe durch die Übergangsmetallverbindung. Eine Auflistung bekannter Liganden findet sich beispielsweise in WO 97/18247, WO 97/47661 oder WO 98/40415. Als koordinativer Bestandteil weisen die als Ligand verwendeten Verbindungen zumeist ein oder mehrere Stickstoff-, Sauerstoff-, Phosphor- und/oder Schwefelatome auf. Besonders bevorzugt sind dabei stickstoffhaltige Verbindungen. Ganz besonders bevorzugt sind stickstoffhaltige Chelatliganden. Als Beispiele seien 2,2'-Bipyridin, N,N,N',N",N"-Pentamethyldiethylentriamin (PMDETA), Tris(2-aminoethyl)amin (TREN), N,N,N',N'-Tetramethylethylendiamin oder 1,1,4,7,10,10-Hexamethyltriethylentetramin aufgeführt. Wertvolle Hinweise zur Auswahl und Kombination der einzelnen Komponenten findet der Fachmann in WO 98/40415.

Diese Liganden können in situ mit den Metallverbindungen Koordinationsverbindungen bilden oder sie können zunächst als Koordinationsverbindungen hergestellt werden und anschließend in die Reaktionsmischung gegeben werden.

Das Verhältnis Ligand (L) zu Übergangsmetall ist abhängig von der Zähnigkeit des Liganden und der Koordinationszahl des Übergangsmetalls (M). Im Allgemeinen liegt das molare Verhältnis im Bereich 100:1 bis 0,1:1, vorzugsweise 6:1 bis 0,1:1 und besonders bevorzugt 3:1 bis 1:1, ohne dass hierdurch eine Beschränkung erfolgen soll.

Ein weiterer Vorteil der Blockcopolymere ist die Farblosigkeit sowie die Geruchlosigkeit des hergestellten Produkts. Die Geruchlosigkeit ergibt sich insbesondere das schwefelfreie Herstellverfahren.

Somit ergibt sich ein breites Anwendungsfeld für diese Produkte. Die Auswahl der Anwendungsbeispiele ist nicht dazu geeignet die Verwendung der erfindungsgemäßen Polymere einzuschränken. Die Beispiele sollen einzig dazu dienen, stichprobenartig die breite Einsatzmöglichkeit der beschriebenen Polymere darzustellen. Bevorzugt werden Blockcopolymere der Zusammensetzung ABA als Präpolymere in, Klebmassen Dichtmassen oder reaktiven Hotmelts verwendet. Die Präpolymere können mit beliebigen Polymeren vernetzt werden. Denkbar sind auch Anwendungen als Bindemittel, Reaktivkomponente oder Dispergiermittel in Lackformulierungen.

Die im Folgenden gegebenen Beispiele werden zur besseren Veranschaulichung der vorliegenden Erfindung gegeben, sind jedoch nicht dazu geeignet, die Erfindung auf die hierin offenbarten Merkmale zu beschränken.

### Beispiele

### Beispiel 1

In einem mit Rührer, Thermometer, Rückflusskühler, Stickstoffeinleitungsrohr und Tropftrichter ausgestatteten Doppelmantelgefäß wurden unter N₂-Atmosphäre Monomer 1a (genaue Bezeichnung und Mengenangabe in Tabelle 1), 115 g Butylacetat, 1,15 g Kupfer(I)oxid und 2,9 g N,N,N',N",N"-Pentamethyldiethylentriamin (PMDETA) vorgelegt. Die Lösung wird für 15 min. bei 60 °C gerührt. Anschließend wird bei gleicher Temperatur in Butylacetat gelöster Initiator 1,4-Butandiol-di-(2-bromo-2-methylpropionat) (BDBIB) zugetropft (Mengen - s. Tabelle 1). Nach einer Polymerisationszeit von 3' Stunden wird eine Probe zur Bestimmung des mittleren Molgewichts Mₙ (mittels SEC) entnommen und eine Mischung aus Monomer 2a und Monomer 3a (genaue Bezeichnung und Mengenangabe in Tabelle 1) zugegeben. Die Mischung wird bis zu einem erwarteten Umsatz von mindestens 98% polymerisiert und durch Exposition mit Luftsauerstoff sowie die optionale Zugabe von Methylenchlorid abgebrochen. Die Lösung wird durch Filtration über Kieselgel und die anschließende Entfernung volatiler Bestandteile mittels Destillation aufgearbeitet. Das mittlere Molekulargewicht wird abschließend durch SEC-Messungen bestimmt. Der Anteil an eingebautem Monomer 3a wird durch ¹H-NMR-Messungen quantifiziert.

### Beispiel 2

Analog dem Beispiel 1 werden die Monomere 1b, 2b und 3b (genaue Bezeichnung und Mengenangabe in Tabelle 1) eingesetzt.

### Beispiel 3

Analog dem Beispiel 1 werden die Monomere 1c, 2c und 3c (genaue Bezeichnung und Mengenangabe in Tabelle 1) eingesetzt.

### Beispiel 4

Analog dem Beispiel 1 werden die Monomere 1d, 2d und 3d (genaue Bezeichnung und Mengenangabe in Tabelle 1) eingesetzt.

**Tabelle 1**

| Beispiel | 1 | 2 | 3 | 4 |
|---|---|---|---|---|
| Monomer 1 | 1a) n-BA | 1b) n-BA | 1c) MMA | 1d) MMA |
| Menge | 70 g | 70 g | 70 g | 70 g |
| Monomer 2 | 2a) MMA | 2b) n-BA | 2c) n-BA | 2d) MMA |
| Menge | 10g | 10g | 10g | 10g |
| Monomer 3 | 3a) DMAEMA | 3b) DMAEMA | 3c) DMAEMA | 3d) DMAEMA |
| Menge | 5,5 g | 5,5 g | 5,5 g | 5,5 g |
| Initiatormenge | 3,2 g | 3,2 g | 3,2 g | 3,2 g |
| Mₙ (1.Sufe) | 12200 | 12100 | 11100 | 11900 |
| Mₙ (Endprodukt) | 17000 | 16200 | 15800 | 15600 |
| D | 1,19 | 1,31 | 1,24 | 1,23 |

| | | | | |
|---|---|---|---|---|
| MMA= Methylmethacrylat; n-BA= n-Butylacrylat, DEMEMA= 2-Dimethylaminoethyl-methacrylat | | | | |

### Beispiel 5

In einem mit Rührer, Thermometer, Rückflusskühler, Stickstoffeinleitungsrohr und Tropftrichter ausgestatteten Doppelmantelgefäß wurden unter N₂-Atmosphäre Monomer Ia (genaue Bezeichnung und Mengenangabe in Tabelle 2), 120 g Butylacetat, 1,15 g Kupfer(I)oxid und 2,9 g PMDETA vorgelegt. Die Lösung wird für 15 min. bei 60 °C gerührt. Anschließend wird bei gleicher Temperatur in Butylacetat gelöster Initiator 1,4-Butandiol-di-(2-bromo-2-methylpropionat) (BDBIB) zugetropft. Nach der Polymerisationszeit von 3 Stunden wird eine Probe zur Bestimmung des mittleren Molgewichts Mₙ (mittels SEC) entnommen und Monomer IIa (genaue Bezeichnung und Mengenangabe in Tabelle 2) beigefügt. Nach einem errechneten 98%igen Umsatz wird schließlich eine Mischung aus Monomer IIa' und Monomer IIIa (genaue Bezeichnung und Mengenangabe in Tabelle 2) zugegeben. Die Mischung wird bis zu einem erwarteten Umsatz von mindestens 98% polymerisiert und durch Exposition mit Luftsauerstoff sowie die optionale Zugabe von Methylenchlorid abgebrochen. Die Lösung wird durch Filtration über Kieselgel und die anschließende Entfernung volatiler Bestandteile mittels Destillation aufgearbeitet. Das mittlere Molekulargewicht wird abschließend durch SEC-Messungen bestimmt. Der Anteil an eingebautem Monomer IIIa wird durch ¹H-NMR-Messungen quantifiziert

**Tabelle 2**

| Beispiel | 5 |
|---|---|
| Monomer I | Ia) n-BA |
| Menge | 40 g |
| Monomer II | IIa) MMA |
| Menge | 40 g |
| Monomer II' | IIa') MMA |
| Menge | 10 g |
| Monomer III | IIIa) DMAEMA |
| Menge | 5,5 g |
| Initiatormenge | 3,3 g |
| Mₙ(1.Sufe) | 11500 |
| Mₙ (Endprodukt) | 18400 |
| D | 1,29 |

| | |
|---|---|
| MMA= Methylmethacrylat; n-BA= n-Butylacrylat, DMAEMA= 2-Dimethylaminoethyl-methacrylat | |

### Beispiel 6 (Vergleichsbeispiel 1)

### Synthese unfunktionalisierter ABA-Triblockcopolymere

Allgemeine Vorschrift zur Synthese der beschriebenen ABA-Triblockcopolymere mittels ATRP:
In einem mit Rührer, Thermometer, Rückflusskühler, Stickstoffeinleitungsrohr und Tropftrichter ausgestatteten Doppelmantelgefäß wurden unter N₂-Atmosphäre Monomer V1a (genaue Bezeichnung und Mengenangabe in Tabelle 3), Butylacetat, Kupfer(I)oxid und PMDETA vorgelegt. Die Lösung wird für 15 min. bei 60 °C gerührt. Anschließend wird bei gleicher Temperatur in Butylacetat gelöster Initiator 1,4-Butandiol-di-(2-bromo-2-methylpropionat) (BDBIB) zugetropft. Nach der Polymerisationszeit t₁ von 3 Stunden wird eine Probe zur Bestimmung des mittleren Molgewichts Mₙ (mittels SEC) entnommen und Monomer V2a (genaue Bezeichnung und Mengenangabe in Tabelle 3) zugegeben. Die Mischung wird bis zu einem erwarteten Umsatz von mindestens 98% polymerisiert und durch Exposition mit Luftsauerstoff sowie die optionale Zugabe von Methylenchlorid abgebrochen. Die Lösung wird durch Filtration über Kieselgel und die anschließende Entfernung volatiler Bestandteile mittels Destillation aufgearbeitet. Das mittlere Molekulargewicht wird abschließend durch SEC-Messungen bestimmt.

### Beispiel 7 (Vergleichsbeispiel 2)

Analog dem Beispiel 6 werden die Monomere V1b und V2b (genaue Bezeichnung und Mengenangabe in Tabelle 3) eingesetzt.

### Beispiel 8 (Vergleichsbeispiel 3)

Analog dem Beispiel 6 werden die Monomere V1 c und V2c (genaue Bezeichnung und Mengenangabe in Tabelle 3) eingesetzt.

### Beispiel 9 (Vergleichsbeispiel 4)

Analog dem Beispiel 6 werden die Monomere V1 d und V2d (genaue Bezeichnung und Mengenangabe in Tabelle 3) eingesetzt.

**Tabelle 3**

| Beispiel | 6 | 7 | 8 | 9 |
|---|---|---|---|---|
| MonomerV1 | V1a)MMA | V1b)n-BA | V1c)n-BA | V1d)MMA |
| Menge | 84,88 g | 88,15 g | 84,47 g | 74,45 g |
| Monomer V2 | V2a) MMA | V2b) MMA | V2c) n-BA | V2d) n-BA |
| Menge | 15,12 g | 11,85 g | 15,13 g | 25,55 g |
| Initiatormenge | 3,09 g | 2,51 g | 2,41 g | 2,72 g |
| Mₙ(1.Sufe) | 7600 | - | 12900 | 9200 |
| Mₙ (Endprodukt) | 8100 | 14500 | 13800 | 8400 |
| D | 1,25 | 1,29 | 1,26 | 1,23 |

| | | | | |
|---|---|---|---|---|
| MMA= Methylmethacrylat; n-BA= n-Butylacrylat | | | | |

## Patentansprüche

1. Blockcopolymere der Zusammensetzung ABA mit ≤4 funktionellen Gruppen in den einzelnen A-Blöcken, **dadurch gekennzeichnet,**
**dass** Block A, ein Copolymer enthaltend aminfunktionalisierte (Meth)acrylate und Monomere ausgewählt aus der Gruppe der (Meth)acrylate oder deren Mischungen und einen
Block B, enthaltend (Meth)acrylate oder deren Mischungen, die keine zusätzlichen Funktionalitäten aufweisen,
als ABA-Blockcopolymerisate polymerisiert werden.

2. Blockcopolymere gemäß Anspruch 1, **dadurch gekennzeichnet, dass** es sich bei den aminfunktionalisierten (Meth)acrylaten um Monomere der Form
H₂C=CR'-C(=O)XR²NR³R⁴
handelt, wobei
R¹ ein Wasserstoff oder eine Methylgruppe ist und
R² geradkettige, verzweigte oder cycloaliphatische zweifach funktionalisierte Kohlenwasserstoffsegmente sind, mit 2 bis 36 C-Atomen, die durch Veresterung von Aminoalkoholen mit Acrylsäure oder Methacrylsäure eingeführt wurden,
X Sauerstoff oder -NH- ist und
R³ und R⁴ können identische oder auch unterschiedliche organische Reste aus der Gruppe gradkettigen, verzweigten oder cycloaliphatischen Alkyl- und / oder Arylreste mit 2 bis 20 C-Atomen sein.

3. Blockcopolymere gemäß Anspruch 1, **dadurch gekennzeichnet, dass** die Blockcopolymere mittels ATRP polymerisierbare Monomere, die nicht zu der Gruppe der (Meth)acrylate gezählt werden, in Block A und/oder Block B enthalten.

4. Blockcopolymere gemäß Anspruch 1, **dadurch gekennzeichnet, dass** die Blockcopolymere mittels ATRP polymerisierbare Monomere, die nicht zu der Gruppe der (Meth)acrylate gezählt werden, in Mengen von 0-50 Gew.-% in den Blöcken A und/oder B enthalten.

5. Blockcopolymere gemäß Anspruch 1, **dadurch gekennzeichnet, dass** die einzelnen A-Blöcke der ABA-Blockcopolymere eine Zusammensetzung mit ≤ 2 Amingruppen aufweisen.

6. Blockcopolymere gemäß Anspruch 1, **dadurch gekennzeichnet, dass** die einzelnen A-Blöcke weniger als 20% des Gesamtgewichts des ABA-Blockcopolymers ausmachen.

7. Blockcopolymere gemäß Anspruch 6, **dadurch gekennzeichnet, dass** die einzelnen A-Blöcke weniger als 10% des Gesamtgewichts des ABA-Blockcopolymers ausmachen.

8. Blockcopolymere gemäß Anspruch 1, **dadurch gekennzeichnet, dass** die einzelnen A-Blöcke wiederum in sich eine AC-Diblockstruktur aufweisen können und somit zu ACBCA-Pentablockcopolymeren führen.

9. Blockcopolymere gemäß Anspruch 8, **dadurch gekennzeichnet, dass** die Zusammensetzung der C-Blöcke der Zusammensetzung des nicht aminfunktionalisierten Anteils in den A-Blöcken entspricht.

10. Blockcopolymere gemäß Anspruch 1, **dadurch gekennzeichnet, dass** die aminfunktionalisierten (Meth)acrylate bevorzugt ausgewählt sind aus der Gruppe 2-Dimethylaminoethyl-methacrylat, 2-Diethylaminoethyl-methacrylat, 2-*tert*-butylaminoethyl-methacrylat, 2-Dimethylaminoethylacrylat, 2-Diethylaminoethyl-acrylat, 2-*tert*-butylaminoethyl-acrylat, 3-Dimethylaminopropyl-methacrylamid und 3-Dimethylaminopropyl-acrylamid.

11. Blockcopolymere gemäß Anspruch 1, **dadurch gekennzeichnet, dass** die (Meth)acrylate bevorzugt ausgewählt sind aus der Gruppe der Alkyl(meth)acrylate von gradkettigen, verzweigten oder cycloaliphatischen Alkoholen mit 1-40 C-Atomen, wie zum Beispiel Methyl(meth)acrylat, Ethyl(meth)acrylat, n-Butyl(meth)acrylat, i-Butyl(meth)acrylat, t-Butyl(meth)acrylat, 2-Ethylhexyl(meth)acrylat, Stearyl(meth)acrylat, Lauryl(meth)acrylat, Cyclohexyl(meth)acrylat, Isobornyl(meth)acrylat, Aryl(meth)acrylate wie zum Beispiel Benzyl(meth)acrylat oder Phenyl(meth)acrylat die jeweils unsubstituiert oder 1-4-fach substituierte Arylreste aufweisen können, Mono(meth)acrylate von Ethern, Polyethylenglycolen, Polypropylenglycolen oder deren Mischungen mit 5-80 C-Atomen, wie beispielsweise Tetrahydrofurfurylmethacrylat, Methoxy(m)ethoxyethylmethacrylat, 1-Butoxypropylmethacrylat, Cyclohexyloxymethylmethacrylat, Benzyloxymethylmethacrylat, Furfurylmethacrylat, 2-Butoxyethylmethacrylat, 2-Ethoxyethylmethacrylat, Allyloxymethylmethacrylat, 1-Ethoxybutylmethacrylat, 1-Ethoxyethylmethacrylat, Ethoxymethylmethacrylat, Poly(ethylenglycol)methylether(meth)acrylat oder Poly(propylenglycol)methylether(meth)acrylat.

12. Blockcopolymere gemäß Anspruch 1, **dadurch gekennzeichnet, dass** die Blöcke A und/oder B Vinylester, Vinylether, Fumarate, Maleate, Styrole, Acrylonitrile oder andere mittels ATRP polymerisierbare Monomere enthalten können.

13. Verfahren zur Herstellung von Blockcopolymeren der Zusammensetzung ABA mit ≤4 Amingruppen in den einzelnen A-Blöcken, **dadurch gekennzeichnet, dass** Block A, ein Copolymer enthaltend aminfunktionalisierte (Meth)acrylate und Monomere ausgewählt aus der Gruppe der (Meth)acrylate oder deren Mischungen und ein
Block B, enthaltend (Meth)acrylate oder deren Mischungen, die keine Aminfunktion aufweisen, mittels Atom Transfer Radical Polymerization (ATRP) in Anwesenheit eines Initiators und eines Katalysators in einem halogenfreien Lösungsmittel dargestellt werden.

14. Verfahren zur Herstellung von Blockcopolymeren gemäß Anspruch 13, **dadurch gekennzeichnet, dass** es sich bei dem Initiator um einen bifunktionellen Initiator handelt.

15. Verfahren zur Herstellung von Blockcopolymeren gemäß Anspruch 14, **dadurch gekennzeichnet, dass** als bifunktioneller Initiator bevorzugt 1,4-Butandiol-di-(2-bromo-2-methylpropionat), 1,2-Ethylenglycol-di-(2-bromo-2-methylpropionat), 2,5-Dibrom-adipinsäure-di-ethylester oder 2,3-Dibrom-maleinsäure-di-ethylester eingesetzt wird.

16. Verfahren zur Herstellung von Blockcopolymeren gemäß Anspruch 13, **dadurch gekennzeichnet, dass** das Blockcopolymer der Zusammensetzung ABA mittels sequentieller Polymerisation dargestellt wird.

17. Verfahren zur Herstellung von Blockcopolymeren gemäß Anspruch 13, **dadurch gekennzeichnet, dass** als Katalysator Übergangsmetallverbindungen verwendet werden.

18. Verfahren zur Herstellung von Blockcopolymeren gemäß Anspruch 17, **dadurch gekennzeichnet, dass** als Katalysator Kupfer-, Eisen-, Rhodium-, Platin-, Ruthenium- oder Nickelverbindungen verwendet werden.

19. Verfahren zur Herstellung von Blockcopolymeren gemäß Anspruch 18, **dadurch gekennzeichnet, dass** als Katalysator Kupferverbindungen verwendet werden.

20. Verfahren zur Herstellung von Blockcopolymeren gemäß Anspruch 13, **dadurch gekennzeichnet, dass** der Katalysator vor der Polymerisation mit einer stickstoff-, sauerstoff-, schwefel- oder phosphorhaltigen Verbindung, die eine oder mehrere koordinative Bindungen mit dem Übergangsmetall zu einem Metall-Ligand-Komplex eingehen kann, zusammengebracht wird.

21. Verfahren zur Herstellung von Blockcopolymeren gemäß Anspruch 20, **dadurch gekennzeichnet, dass** als Ligand N-haltige Chelatliganden verwendet werden.

22. Verfahren zur Herstellung von Blockcopolymeren gemäß Anspruch 21,
**dadurch gekennzeichnet, dass** als Ligand 2,2'-Bipyridin, N,N,N',N",N"-Pentamethyldiethylentriamin (PMDETA), Tris(2-aminoethyl)amin (TREN), N,N,N',N'-Tetramethylethylendiamin oder 1,1,4,7,10,10-Hexamethyltriethylentetramin verwendet wird.

23. Verfahren zur Herstellung von Blockcopolymeren gemäß Anspruch 13, **dadurch gekennzeichnet, dass** das Blockcopolymer ein zahlenmittleres Molekulargewicht zwischen 5000 g/mol und 100000 g/mol aufweist.

24. Verfahren zur Herstellung von Blockcopolymeren gemäß Anspruch 23, **dadurch gekennzeichnet, dass** das Blockcopolymer bevorzugt ein zahlenmittleres Molekulargewicht zwischen 7500 g/mol und 25000 g/mol aufweist.

25. Verfahren zur Herstellung von Blockcopolymeren gemäß Anspruch 13, **dadurch gekennzeichnet, dass** das Blockcopolymer eine Molekulargewichtsverteilung kleiner 1,8 aufweist.

26. Verfahren zur Herstellung von Blockcopolymeren gemäß Anspruch 25, **dadurch gekennzeichnet, dass** das Blockcopolymer bevorzugt eine Molekulargewichtsverteilung kleiner 1,4 aufweist.

27. Verwendung von Blockcopolymeren der Zusammensetzung ABA mit ≤4 Amingruppen in den einzelnen A-Blöcken, **dadurch gekennzeichnet,**
**dass** Block A, ein Copolymer enthaltend aminfunktionalisierte (Meth)acrylate und Monomere ausgewählt aus der Gruppe der (Meth)acrylate oder deren Mischungen und ein
Block B, enthaltend (Meth)acrylate oder deren Mischungen, die keine Aminfunktionalitäten aufweisen,
als ABA-Blockcopolymerisate polymerisiert werden,
in Klebmassen, Dichtmassen, Reaktivschmelzklebstoffen.

28. Verwendung von Blockcopolymeren der Zusammensetzung ABA mit ≤4 Amingruppen in den einzelnen A-Blöcken, **dadurch gekennzeichnet,**
**dass** Block A, ein Copolymer enthaltend aminfunktionalisierte (Meth)acrylate und Monomere ausgewählt aus der Gruppe der (Meth)acrylate oder deren Mischungen und ein
Block B, enthaltend (Meth)acrylate oder deren Mischungen, die keine Aminfunktionalitäten aufweisen,
als ABA-Blockcopolymerisate polymerisiert werden,
als Bindemittel, Reaktivkomponente oder Dispergiermittel in Lackformulierungen.

## Claims

1. Block copolymers of composition ABA with ≤4 functional groups in the individual A blocks,
**characterized in that**
block A, a copolymer containing amine-functionalized (meth)acrylates and monomers selected from the group of (meth)acrylates or mixtures thereof and one
block B, containing (meth)acrylates or mixtures thereof which have no additional functionalities, are polymerized as ABA block copolymers.

2. Block copolymers according to Claim 1,
**characterized in that** the amine-functionalized (meth)acrylates are monomers of the form
H₂C=CR¹-C (=O) XR²NR³R⁴
where
R¹ is a hydrogen or a methyl group and
R² are straight-chain, branched or cycloaliphatic, doubly functionalized hydrocarbon segments, having 2 to 36 C atoms, which have been introduced by esterification of amino alcohols with acrylic acid or methacrylic acid,
X is oxygen or -NH-, and
R³ and R⁴ may be identical or else different organic radicals from the group of straight-chain, branched or cycloaliphatic alkyl and/or aryl radicals having 2 to 20 C atoms.

3. Block copolymers according to Claim 1,
**characterized in that** the block copolymers contain ATRP-polymerizable monomers which are not included in the group of (meth)acrylates in block A and/or block B.

4. Block copolymers according to Claim 1,
**characterized in that** the block copolymers contain ATRP-polymerizable monomers which are not included in the group of (meth)acrylates in amounts of 0-50% by weight in blocks A and/or B.

5. Block copolymers according to Claim 1,
**characterized in that** the individual A blocks of the ABA block copolymers have a composition with ≤2 amine groups.

6. Block copolymers according to Claim 1,
**characterized in that** the individual A blocks make up less than 20% of the total weight of the ABA block copolymer.

7. Block copolymers according to Claim 6,
**characterized in that** the individual A blocks make up less than 10% of the total weight of the ABA block copolymer.

8. Block copolymers according to Claim 1,
**characterized in that** the individual A blocks may in turn inherently have an AC diblock structure and so lead to ACBCA pentablock copolymers.

9. Block copolymers according to Claim 8,
**characterized in that** the composition of the C blocks corresponds to the composition of the non-amine-functionalized fraction in the A blocks.

10. Block copolymers according to Claim 1,
**characterized in that** the amine-functionalized (meth)acrylates are preferably selected from the group of 2-dimethylaminoethyl methacrylate, 2-diethylaminoethyl methacrylate, 2-*tert*-butylaminoethyl methacrylate, 2-dimethylaminoethyl acrylate, 2-diethylaminoethyl acrylate, 2-*tert-*butylaminoethyl acrylate, 3-dimethylaminopropylmethacrylamide and 3-dimethylaminopropylacrylamide.

11. Block copolymers according to Claim 1,
**characterized in that** the (meth)acrylates are preferably selected from the group of alkyl (meth)acrylates of straight-chain, branched or cycloaliphatic alcohols having 1-40 carbon atoms, such as, for example, methyl (meth)acrylate, ethyl (meth)acrylate, n-butyl (meth)acrylate, isobutyl (meth)acrylate, tert-butyl (meth)acrylate, 2-ethylhexyl (meth)acrylate, stearyl (meth)acrylate, lauryl (meth)acrylate, cyclohexyl (meth)acrylate, isobornyl (meth)acrylate, aryl (meth)acrylates such as, for example, benzyl (meth)acrylate or phenyl (meth)acrylate which may in each case have unsubstituted or mono- to tetra-substituted aryl radicals, mono(meth)acrylates of ethers, polyethylene glycols, polypropylene glycols or mixtures thereof having 5-80 carbon atoms, such as, for example, tetrahydrofurfuryl methacrylate, methoxy(m)ethoxyethyl methacrylate, 1-butoxypropyl methacrylate, cyclohexyloxymethyl methacrylate, benzyloxymethyl methacrylate, furfuryl meth-acrylate, 2-butoxyethyl methacrylate, 2-ethoxy-ethyl methacrylate, allyloxymethyl methacrylate, 1-ethoxybutyl methacrylate, 1-ethoxyethyl meth-acrylate, ethoxymethyl methacrylate, poly(ethylene glycol) methyl ether (meth)acrylate or poly-(propylene glycol) methyl ether (meth)acrylate.

12. Block copolymers according to Claim 1,
**characterized in that** the blocks A and/or B may contain vinyl esters, vinyl ethers, fumarates, maleates, styrenes, acrylonitriles or other ATRP-polymerizable monomers.

13. Process for preparing block copolymers of composition ABA with ≤4 amine groups in the individual A blocks, **characterized in that** block A, a copolymer containing amine-functionalized (meth)acrylates and monomers selected from the group of (meth)acrylates or mixtures thereof, and one block B, containing (meth)acrylates or mixtures thereof which have no amine function, are prepared by means of atom transfer radical polymerization (ATRP) in the presence of an initiator and of a catalyst in a halogen-free solvent.

14. Process for preparing block copolymers according to Claim 13, **characterized in that** the initiator is a bifunctional initiator.

15. Process for preparing block copolymers according to Claim 14, **characterized in that** 1,4-butanediol di(2-bromo-2-methylpropionate), 1,2-ethylene glycol di(2-bromo-2-methylpropionate), diethyl 2,5-dibromoadipate or diethyl 2,3-dibromomaleate is used preferably as bifunctional initiator.

16. Process for preparing block copolymers according to Claim 13, **characterized in that** the block copolymer of composition ABA is prepared by means of sequential polymerization.

17. Process for preparing block copolymers according to Claim 13, **characterized in that** transition metal compounds are used as catalyst.

18. Process for preparing block copolymers according to Claim 17, **characterized in that** compounds of copper, of iron, of rhodium, of platinum, of ruthenium or of nickel are used as catalyst.

19. Process for preparing block copolymers according to Claim 18, **characterized in that** copper compounds are used as catalyst.

20. Process for preparing block copolymers according to Claim 13, **characterized in that** prior to the polymerization the catalyst is brought together with a nitrogen, oxygen, sulphur or phosphorus compound which is able to form one or more coordinative bonds with the transition metal to form a metal-ligand complex.

21. Process for preparing block copolymers according to Claim 20, **characterized in that** N-containing chelate ligands are used as ligand.

22. Process for preparing block copolymers according to Claim 21, **characterized in that** 2,2'-bipyridine, N,N,N',N",N"-pentamethyldiethylenetriamine (PMDETA), tris(2-aminoethyl)amine (TREN), N,N,N',N'-tetramethylethylenediamine or 1,1,4,7,10,10-hexamethyltriethylenetetramine is used as ligand.

23. Process for preparing block copolymers according to Claim 13, **characterized in that** the block copolymer has a number-average molecular weight of between 5000 g/mol and 100 000 g/mol.

24. Process for preparing block copolymers according to Claim 23, **characterized in that** the block copolymer preferably has a number-average molecular weight of between 7500 g/mol and 25 000 g/mol.

25. Process for preparing block copolymers according to Claim 13, **characterized in that** the block copolymer has a molecular weight distribution of less than 1.8.

26. Process for preparing block copolymers according to Claim 25, **characterized in that** the block copolymer preferably has a molecular weight distribution of less than 1.4.

27. Use of block copolymers of composition ABA with ≤4 amine groups in the individual A blocks,
**characterized in that**
block A, a copolymer containing amine-functionalized (meth)acrylates and monomers selected from the group of (meth)acrylates or mixtures thereof, and one
block B, containing (meth)acrylates or mixtures thereof which have no amine functionalities, are polymerized as ABA block copolymers,
in adhesive compositions, sealants, reactive hotmelt adhesives.

28. Use of block copolymers of composition ABA with ≤4 amine groups in the individual A blocks,
**characterized in that**
block A, a copolymer containing amine-functionalized (meth)acrylates and monomers selected from the group of (meth)acrylates or mixtures thereof, and one
block B, containing (meth)acrylates or mixtures thereof which have no amine functionalities, are polymerized as ABA block copolymers,
as binder, reactive component or dispersant in coating formulations.

## Revendications

1. Copolymères à blocs, ayant la composition ABA, avec ≤ 4 groupes fonctionnels dans les différents blocs A, **caractérisés en ce qu'**un bloc A, un copolymère contenant des (méth)acrylates amino-fonctionnalisés et des monomères choisis dans le groupe des (méth)acrylates ou les mélanges de ceux-ci, et un bloc B, contenant des (méth)acrylates ou des mélanges de ceux-ci, qui ne comportent pas de fonctionnalités supplémentaires, sont soumis à une polymérisation sous forme de copolymères à blocs ABA.

2. Copolymères à blocs selon la revendication 1, **caractérisés en ce que**, pour ce qui concerne les (méth)acrylates amino-fonctionnalisés, il s'agit de monomères de la forme
H₂C=CR¹-C (=O) XR²NR³R⁴,
où R¹ est un atome d'hydrogène ou un groupe méthyle, et
R² représente des segments hydrocarbonés à chaîne droite, ramifiée ou cycloaliphatique, bifonctionnalisés, ayant 2 à 36 atomes de carbone, qui ont été introduits par estérification d'amino-alcools avec de l'acide acrylique ou de l'acide méthacrylique,
X est un atome d'oxygène ou -NH-, et
R³ et R⁴ peuvent être des radicaux organiques identiques, ou aussi différents, du groupe des radicaux alkyle et/ou aryle à chaîne droite, ramifiée ou cycloaliphatique, ayant 2 à 20 atomes de carbone.

3. Copolymères à blocs selon la revendication 1, **caractérisés en ce que** les copolymères à blocs contiennent dans le bloc A et/ou dans le bloc B des monomères polymérisables par ATRP, qui ne sont pas comptés dans le groupe des (méth)acrylates.

4. Copolymères à blocs selon la revendication 1, **caractérisés en ce que** les copolymères à blocs contiennent dans les blocs A et/ou B, en des quantités de 0 à 50 % en poids, des monomères polymérisables par ATRP qui ne sont pas comptés dans le groupe des (méth)acrylates.

5. Copolymères à blocs selon la revendication 1, **caractérisés en ce que** les différents blocs A des copolymères à blocs ABA ont une composition contenant ≤ 2 groupes amino.

6. Copolymères à blocs selon la revendication 1,
**caractérisés en ce que** les différents blocs A représentent moins de 20 % du poids total du copolymère à blocs ABA.

7. Copolymères à blocs selon la revendication 6,
**caractérisés en ce que** les différents blocs A représentent moins de 10 % du poids total du copolymère à blocs ABA.

8. Copolymères à blocs selon la revendication 1,
**caractérisés en ce que** les différents blocs A présentent en soi, pour ce qui les concerne, une structure dibloc, et conduisent ainsi à un copolymère pentabloc ACBCA.

9. Copolymères à blocs selon la revendication 8,
**caractérisés en ce que** la composition des blocs C correspond à la composition de la partie non amino-fonctionnalisée des blocs A.

10. Copolymères à blocs selon la revendication 1, **caractérisés en ce que** les (méth)acrylates amino-fonctionnalisés sont de préférence choisis dans le groupe consistant en le méthacrylate de 2-diméthylaminoéthyle, le méthacrylate de 2-diéthylaminoéthyle, le méthacrylate de 2-tert-butylaminoéthyle, l'acrylate de 2-diméthylaminoéthyle, l'acrylate de 2-diéthylaminoéthyle, l'acrylate de 2-tert-butylaminoéthyle, le 3-diméthylaminopropyl-méthacrylamide et le 3-diméthylaminopropyl-acrylamide.

11. Copolymères à blocs selon la revendication 1, **caractérisés en ce que** les (méth)acrylates sont choisis de préférence dans le groupe consistant en les (méth)acrylates d'alkyle d'alcools à chaîne droite ou ramifiée, ou cycloaliphatiques, ayant 1 à 40 atomes de carbone, tels que par exemple le (méth)acrylate de méthyle, le (méth)acrylate d'éthyle, le (méth)acrylate de n-butyle, le (méth)acrylate d'isobutyle, le (méth)acrylate de tert-butyle, le (méth)acrylate de 2-éthylhexyle, le (méth)acrylate de stéaryle, le (méth)acrylate de lauryle, le (méth)acrylate de cyclohexyle, le (méth)acrylate d'isobornyle, les (méth)acrylates d'aryle tels que par exemple le (méth)acrylate de benzyle ou le (méth)acrylate de phényle, dont chacun peut comporter des résidus aryle non substitués, ou 1-4 fois substitués, les mono(méth)acrylates d'éthers, de polyéthylèneglycols, de polypropylèneglycols ou de mélanges de ceux-ci ayant 5 à 80 atomes de carbone, tels que par exemple le méthacrylate de tétrahydrofurfuryle, le méthacrylate de méthoxy(m)éthoxyéthyle, le méthacrylate de 1-butoxypropyle, le méthacrylate de cyclohexyloxyméthyle, le méthacrylate de benzyloxyméthyle, le méthacrylate de furfuryle, le méthacrylate de 2-butoxyéthyle, le méthacrylate de 2-éthoxyéthyle, le méthacrylate d'allyloxyméthyle, le méthacrylate de 1-éthoxybutyle, le méthacrylate de 1-éthoxyéthyle, le méthacrylate d'éthoxyméthyle, le (méth)acrylate de l'éther méthylique du polyéthylèneglycol ou le (méth)acrylate de l'éther méthylique du polypropylèneglycol.

12. Copolymères à blocs selon la revendication 1, **caractérisés en ce que** les blocs A et/ou B peuvent contenir des esters vinyliques, des vinyléthers, des fumarates, des maléates, des styrènes, des acrylonitriles ou d'autres monomères polymérisables par ATRP.

13. Procédé de préparation de copolymères à blocs ayant la composition ABA, avec ≤ 4 groupes amino dans les différents blocs A, **caractérisé en ce qu'**on prépare le bloc A, un copolymère contenant des (méth)acrylates amino-fonctionnalisés et des monomères choisis dans le groupe consistant en les (méth)acrylates et les mélanges de ceux-ci, et un bloc B contenant des (méth)acrylates ou des mélanges de ceux-ci, qui ne comportent pas de fonction amino, par une polymérisation radicalaire par transfert d'atome (ATRP) en présence d'un amorceur et d'un catalyseur, dans un solvant non halogéné.

14. Procédé de préparation de copolymères à blocs selon la revendication 13, **caractérisé en ce que**, pour ce qui concerne l'amorceur, il s'agit d'un amorceur bifonctionnel.

15. Procédé de préparation de copolymères à blocs selon la revendication 14, **caractérisé en ce qu'**on utilise en tant qu'amorceur bifonctionnel de préférence le di-(2-bromo-2-méthylpropionate) de 1,4-butanediol, le di-(2-bromo-2-méthylpropionate) de 1,2-éthylèneglycol, l'ester diéthylique de l'acide 2,5-dibromo-adipique ou l'ester diéthylique de l'acide 2,3-dibromo-maléique.

16. Procédé de préparation de copolymères à blocs selon la revendication 13, **caractérisé en ce que** le copolymère à blocs, ayant la composition ABA, est préparé par polymérisation séquentielle.

17. Procédé de préparation de copolymères à blocs selon la revendication 13, **caractérisé en ce qu'**on utilise en tant que catalyseur des composés de métaux de transition.

18. Procédé de préparation de copolymères à blocs selon la revendication 17, **caractérisé en ce qu'**on utilise en tant que catalyseur des composés du cuivre, du fer, du rhodium, du platine, du ruthénium ou du nickel.

19. Procédé de préparation de copolymères à blocs selon la revendication 18, **caractérisé en ce qu'**on utilise en tant que catalyseur des composés du cuivre.

20. Procédé de préparation de copolymères à blocs selon la revendication 13, **caractérisé en ce que** le catalyseur est, avant la polymérisation, mis en contact avec un composé azoté, oxygéné, sulfuré ou phosphoré, qui peut subir une ou plusieurs liaisons par coordination avec le métal de transition, pour donner un complexe métal-ligand.

21. Procédé de préparation de copolymères à blocs selon la revendication 20, **caractérisé en ce qu'**on utilise en tant que ligand un ligand chélate azoté.

22. Procédé de préparation de copolymères à blocs selon la revendication 21, **caractérisé en ce qu'**on utilise en tant que ligand la 2,2'-bipyridine, la N,N,N',N",N"-pentaméthyldiéthylènetriamine (PMDETA), la tris(2-aminoéthyl)amine (TREN), la N,N,N',N'-tétraméthyléthylènediamine ou la 1,1,4,7,10,10-hexaméthyltriéthylènetétramine.

23. Procédé de préparation de copolymères à blocs selon la revendication 13, **caractérisé en ce que** le copolymère à blocs présente une masse moléculaire moyenne en nombre comprise entre 5000 et 100 000 g/mol.

24. Procédé de préparation de copolymères à blocs selon la revendication 23, **caractérisé en ce que** le copolymère à blocs présente de préférence une masse moléculaire moyenne en nombre comprise entre 7500 et 25 000 g/mol.

25. Procédé de préparation de copolymères à blocs selon la revendication 13, **caractérisé en ce que** le copolymère à blocs présente une distribution des masses moléculaires inférieure à 1,8.

26. Procédé de préparation de copolymères à blocs selon la revendication 25, **caractérisé en ce que** le copolymère à blocs présente de préférence une distribution des masses moléculaires inférieure à 1,4.

27. Utilisation de copolymères à blocs ayant la composition ABA avec ≤ 4 groupes amino dans les différents blocs A, **caractérisée en ce qu'**on polymérise un bloc A, un copolymère contenant des (méth)acrylates amino-fonctionnalisés et des monomères choisis dans le groupe consistant en les (méth)acrylates et les mélanges de ceux-ci, et un bloc B contenant des (méth)acrylates ou des mélanges de ceux-ci, qui ne présentent aucune fonctionnalité amino, sous forme de copolymères à blocs ABA, dans des masses adhésives, des masses d'étanchéité, des adhésifs fusibles réactifs.

28. Utilisation de copolymères à blocs ayant la composition ABA avec ≤ 4 groupes amino dans les différents blocs A, **caractérisée en ce qu'**on polymérise un bloc A, un copolymère contenant des (méth)acrylates aminofonctionnalisés et des monomères choisis dans le groupe consistant en les (méth)acrylates et les mélanges de ceux-ci, et un bloc B contenant des (méth)acrylates ou des mélanges de ceux-ci, qui ne présentent aucune fonctionnalité amino, sous forme de copolymères à blocs ABA, en tant que liants, composants réactifs ou dispersants dans des formulations de peinture.
